(19) Europäisches Patentamt / European Patent Office / Office européen des brevets

(11) **EP 2 960 085 B1**

(12) **EUROPEAN PATENT SPECIFICATION**

(45) Date of publication and mention
of the grant of the patent:
**24.10.2018  Bulletin 2018/43**

(51) Int Cl.:
**B60D 1/54** *(2006.01)*    **B60D 1/06** *(2006.01)*

(21) Application number: **14174701.4**

(22) Date of filing: **27.06.2014**

(54) **A towing hook comprising a ball portion and a method for manufacturing a ball portion of a towing hook**

Zughaken mit Kugelabschnitt und Verfahren zur Herstellung eines Kugelabschnitts eines Zughakens

Crochet de remorquage comprenant une partie boule et procédé de fabrication de la partie boule d'un crochet de remorquage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.12.2015  Bulletin 2015/53**

(73) Proprietor: **Brink Towing Systems B.V.
7951 CX Staphorst (NL)**

(72) Inventor: **Borgonje, Christian Frans
NL-7951CX STAPHORST (NL)**

(74) Representative: **Valea AB
Box 1098
405 23 Göteborg (SE)**

(56) References cited:
**EP-A1- 1 905 617         EP-B1- 1 894 752
DE-A1-102004 044 912     DE-A1-102009 045 290**

## Description

### TECHNICAL FIELD

A towing hook for a vehicle comprising a ball portion and a method for manufacturing the ball portion of a towing hook is provided. The towing hook can be a part of a retractable towing hook arrangement adapted to enable the towing hook, after being mounted to the vehicle, to be displaced between a towing position and a retracted position. The disclosure also relates to a gear for a displacement device for a towing hook and a displacement device for a towing hook comprising such gear.

### BACKGROUND

Towing hooks for towing e.g. trailers are commonly used today on vehicles. In most cases a towing hook is mounted on the vehicle during the assembly process of the vehicle, although after sales mounting, e.g. by an authorized garage, is possible. For esthetical and practical reasons it may be desirable to have a towing hook which can be displaced between a towing position and a retracted position. Generally such towing hooks can also be referred to as retractable towing hooks.

There are several considerations when constructing a towing hook of the retractable kind. The available space in which a retractable towing hook arrangement can be mounted on a vehicle varies between different manufactures and models. The rotation path, movement path or movement pattern, of the towing hook can be very space consuming and impart restrictions on the configuration of the towing hook. The towing hook should further, when in the retracted position, not be visible or at least not be clearly visible so as not to affect the aesthetic appearance of the vehicle. It is also important that the towing hook can be retracted to a position in which it is subjected to no or low risk of being damaged by the ground on which the vehicle rests or travels over, or by loose objects from the ground such as dirt or rubble.

An example of a retractable towing hook arrangement is disclosed in the European patent no. EP 1,894,752 B1. The towing hook in the mentioned patent projects from a bearing housing which forms the socket portion of a ball and socket joint. The towing hook has a ball portion forming the corresponding ball of the ball and socket joint. The ball and socket joint enables the towing hook to be displaced between a towing position, sometimes referred to as an operative position, and a retracted position, sometimes referred to as an inoperative position. A cam track cooperates with a displacement device comprising a gear arranged on a motor-driven axle, effects displacement of the towing hook between the towing position and the retracted position. The cam track is arranged in a groove on the ball portion of the towing hook and defines a predetermined rotation path for the towing hook along which the towing hook can rotate between the towing position and the retracted position. A second rotating axle operates a lock to prevent the towing hook from rotating when in the towing position.

Little is mentioned how the cam track can be manufactured in an efficient manner. Little is also mentioned about the cam track itself. The tolerance between the gear that drives the ball portion of the towing hook and the cam track have usually been very important. Due to complex manufacturing procedures, and that towing hooks generally are subjected to high stress levels during use, towing hooks comprising ball portions with cam tracks have been difficult and costly to manufacture. They generally also require separate components to be assembled.

### SUMMARY

It is an object of the present invention to remove, or at least reduce some of the drawbacks of the prior art, or at least to provide for a useful alternative. These objects are at least partly met by a towing hook comprising a ball portion comprising at least one cam track, wherein the cam track is at least partly formed by recesses having a radius curvature.

It has been found that the high demands on tolerance between a cam track of a ball portion on a towing hook, and a drive gear, i.e. a gear adapted to cooperate with the cam track, is less important than first realized. It has been found that the method and the simple geometry of the cam track of the ball portion make it significantly easier to manufacture good gear teeth on a ball portion of the towing hook, i.e. on a 3D surface.

By making the cam track at least partly formed by recesses having a radius curvature. Gear teeth of the cam track can be made robust, which shortens machining time and improves the quality, i.e. tolerance control. It also makes the cam track less susceptible to ordinary wear and tear. This enables the cam track to be manufactured in a cost efficient manner. This is even more important on 3D surfaces, such as the ball portion of the towing hook, as 3D surfaces generally are both difficult and expensive to handle and to machine in a manufacturing process. It has also been found that the function of a retractable towing hook is not significantly reduced and that it is less sensitive to the usual wear and tear if the cam track is at least partly formed by recesses having a radius curvature. The gear teeth of the cam track can optionally be formed with smoother transitions between the recesses of the gear teeth, optionally with blunt tips of the gear teeth.

The towing hook can comprise a first end adapted to be connected to a towable object and a second end comprising the ball portion. The ball portion is adapted to form a ball of ball and socket joint of a towing hook arrangement. The socket joint may be formed by a bearing housing for example. The retractable towing hook arrangement enables the towing hook to be displaced between a towing position and a retracted position when mounted on the vehicle.

The cam track comprises a plurality of gear teeth, wherein at least two of the gear teeth of the cam track are at least partly formed by the recesses having a radius curvature. The cam track can be provided with gear teeth at least partly formed by recesses having a radius curvature, and optionally with gear teeth having other forms. It is preferable that all of the gear teeth of the cam track are at least partly formed by recesses having a radius curvature. Substantially each, or each, of the gear teeth of the cam rack can be separated by a recess having a radius curvature.

The radius curvature can have a radius from 1-20 mm, preferably 1-10 mm. The radius can be 1, 2, 3, 4, 5, 6, 7, 8, or 9 mm for example.

The ball portion can be provided with a groove, sometimes referred to as a cam groove, and the cam track can be arranged in the groove. It has been found advantageous if the cam track is formed by a portion of the groove. A groove generally has a first and a second side wall, and a bottom. The groove may be provided with a first and a second transverse side wall but that is not necessary if the groove extends through the ball portion. The cam track can be formed from one or both of the side walls of the groove.

This is a very cost efficient and favourable manner to manufacture a cam track of the ball portion. It also enables a simple connection with a displacement device, such as a gear driven by an electric motor.

It should be noted that the cam track and the groove, can have different shapes and forms. The cam track and groove can have a J-shaped form for example. The shape and the form of the cam track and the groove is however adapted according to the path that the towing hook is intended to pivot during displacement between the towing position and the retracted position.

The cam track can be integrally formed with the ball portion, i.e. formed in one unitary piece of material with the ball portion, or it can be formed by a separate piece of material attached to the ball portion. It is advantageous however to have the cam track is formed in one unitary piece of material with the ball portion. This enables the manufacturing of the ball portion to be simplified and cost efficient. It minimizes errors imparted due to differences in tolerances which may arise when working with separate components which must match each other during an assembly procedure.

The recesses can have a cylindrical form. Optionally, the recesses may have the form of a truncated cone, preferably with the truncated tip pointing towards the point of rotation of the ball portion.

When the towing hook rotates between the towing position and the retracted position, the towing hook and the ball portion rotates about a point of rotation. The point of rotation can be substantially at the center of the ball portion, or it can be centrally positioned at a center point of the ball portion.

As mentioned, the ball portion comprises a point of rotation. The recesses of the cam track can extend towards the center of the ball portion, preferably towards the point of rotation of the ball portion. In more general terms, the recesses of the cam track are oriented towards the point of rotation of the ball portion. The benefits with this are the same as the benefits mentioned above. When manufacturing the ball portion, it has been found that the cam track and the recesses are advantageously oriented towards the point of rotation as this simplifies the milling of the cam track. It is believed that this is further simplified if the milling tool and the ball portion are displaced simultaneously when milling the cam track. It is however also advantageous when the towing hook is displaced, as a gear on a displacement device drives the towing hook via the cam track on the ball portion. When the ball portion rotates during displacement of the towing hook, the cam track interact well with a drive gear as the cam track is configured to take into account the rotation of the ball portion.

Due to the orientation of the recesses of the cam track and the gear thee, the cam track of the ball portion forms a spherically shaped cam track which can be operated by a straight gear. The cam track is thus of a bevel gear type, which is operated by a straight gear. This is enabled by the robust gear teeth of the cam track.

Gear teeth can further be described as having a length, a width and a height.

It should be noted that the recesses of the cam track may be oriented towards the point of rotation of the ball portion while the length of the gear teeth are not, some offset may be present. It is however advantageous if both the recesses and the length of the gear teeth are oriented towards the point of rotation of the ball portion; preferably extend towards the point of rotation of the ball portion.

The gear teeth of the cam track can be said to comprise a base with a tip. At least a portion of the tip can be provided with an arc shaped form. The tip of the gear teeth can however have different forms. It is believed that it is advantageous if the tip has a flat section. The flat section can be combined with curved edges extending along the length of the gear teeth which preferably transcends to the arc shaped form. Such curved edges preferably have a radius curvature. The arc shaped form extends along the length of the gear teeth. The flat section can have a triangular form. Optionally it may have a trapezium, or trapezoid, form. The triangular form of the flat section has a base and an apex. This will provide for a strong tip, i.e. not to pointy, which can withstand a lot of wear and tear as may be the consequence of having a cam track with less tolerance with respect to a gear of a displacement device and at least some of the conventional technique. If the cam track is formed in one side wall of a groove, the length of the gear teeth are preferably oriented towards the point of rotation of the ball portion, preferably extending towards the point of rotation.

The ball portion comprises a substantially spherical peripheral surface. The outer form of the ball portion should be adapted so that the ball portion can form a ball of a ball and socket joint to enable the towing hook to be displaced between a towing position and a retracted position. The cam track of the ball portion may be positioned on different places on the ball portion. There can further be one or more cam tracks. The cam track can be arranged in a groove, optionally formed by a part of the side wall of the groove, A cam track can be arranged on the spherical peripheral surface of the ball portion. If the cam track is arranged on the peripheral surface of the ball portion, the gear teeth are oriented away from the point of rotation

The present invention also relates to a gear for a displacement device, such as the displacement device disclosed herein, to displace a towing hook between a towing position and a retracted position. The gear comprises a plurality of gear teeth having a length extending along a rotation axis of the gear, and an engagement portion for engaging with a cam track of a ball portion of said towing hook. The plurality of gear teeth has a first and a second width along the length of the gear teeth and at the engagement portion of the gear teeth,

The gear teeth have a first portion having a constant width and a second portion having a decreasing width along the length L of the gear teeth at the engagement portion of the gear teeth. The width thus continuously decreases from the portion having a constant width along the length of the gear teeth, and preferably continuously decreases to a width which is about 50 % of the width at the first portion. The gear teeth improve the connection between the cam track of the ball portion of the towing hook and the gear of the displacement device.

According to an aspect, the present invention relates to a kit of a towing hook comprising a ball portion as disclosed herein, and a displacement device comprising a gear as disclosed herein. The contact between the cam track of the ball portion of the towing hook and the gear of the displacement device starts as a line contact, i.e. a line contact surface, and rolls off as a point, i.e. a point contact surface. It is believed that this has benefits on wear, strength and smoother displacement.

It has been found that much is gained by a cam track which is manufactured in one piece of material with the ball portion of a towing hook. It is an object of the present invention to remove, or at least reduce some of the drawbacks of the prior art, or at least to provide for a useful alternative. This object is met by a method for manufacturing a cam track on a ball portion. The ball portion can be integrally formed with a towing hook or it can be connectable to a towing hook. The method comprises the steps of;

a) milling a groove having a first and a second side wall and a bottom in the ball portion;
b) milling a second groove in the first side wall of the groove;
c) milling a cam track in the first side wall of the groove. The cam track is at least partly defined by the second groove of the first side wall of the groove.

The method provides for a manufacturing which is cost efficient, effective and which can be performed directly on a ball portion of a towing hook. It can be machined with standard, straight tooling. The second groove milled in the first side wall of the groove thus partly forms the sides of the gear teeth which are milled in the subsequent step. The cam track can be milled so that the cam track is aligned with the peripheral surface of the ball portion. In this way the cam track is not protruding from the peripheral surface of the ball portion but rather extends towards the center of the ball portion. The position and shape of the gear teeth can be made more accurate than is done separately by casting. Even if machining the cam track adds more machining time, by having the cam track manufactured in one piece of material with the ball portion, it saves components and assembly time and is therefore more cost effective.

The positions of the gear teeth of the cam track are individual in terms of that each gear tooth has a unique position, or a unique angle, on the ball portion. Simultaneous machining and displacement of the ball portion can advantageously be performed between the recesses, i.e. at the tip of the gear teeth. The cam track can be formed, or partly formed, by milling recesses having a radius curvature.

The orientation of the recesses towards the center of the ball portion, preferably towards a point of rotation of the ball portion has been found to be advantageous as it improves the cam tracks interaction with a displacement device, such as a rotating gear which intermeshes with the cam track to displace a towing hook. Milling the recesses so that the recesses are oriented towards the center of the ball portion, preferably towards the point of rotation of the ball portion, or so that they extends in a direction towards the center of the ball portion, preferably towards a point of rotation of the ball portion is thus advantageous.

The method can further comprise the step of; displacing the ball portion and a milling tool simultaneously, during milling of at least a portion of the ball portion. The simultaneously displacement of the ball portion and the milling tool is performed when machining a tip of at least one gear teeth of the cam track. The transition between the recesses can be formed by simultaneously displacement of the ball portion and the milling tool.

As used herein, the by term "milling" is meant removing matter by mechanical grinding action such as by rotating an end mill, slot mill, ball nose cutter, side and face cutter or the like.

BRIEF DESCRIPTION OF THE DRAWINGS

Non-limiting embodiments of the present invention will be described in greater detail with reference to the accompanying drawings in which;

figure 1a show a retractable towing hook in a towing position;

figure 1b shows the retractable towing hook in a retracted position;

figure 2 shows a retractable towing hook arrangement;

figure 3 shows the ball portion of a towing hook, forming the ball of a ball and socket joint in the retractable towing hook arrangement of figure 2, in greater detail;

figure 4 shows a groove comprising a cam track on the ball portion of figure 3;

figure 5 shows the cam track of figure 4 in greater detail;

figure 6a shows a gear tooth of the cam track of figure 5;

figure 6b shows an alternative gear tooth for the cam track of figure 5;

figure 7a shows the ball portion in a manufacturing stage before the cam track has been formed;

figure 7b shows the ball portion in a manufacturing stage after the cam track has been formed;

figure 8 shows an alternative gear of the displacement device and

figure 9 shows an alternative gear of the displacement device.

DETAILED DESCRIPTION

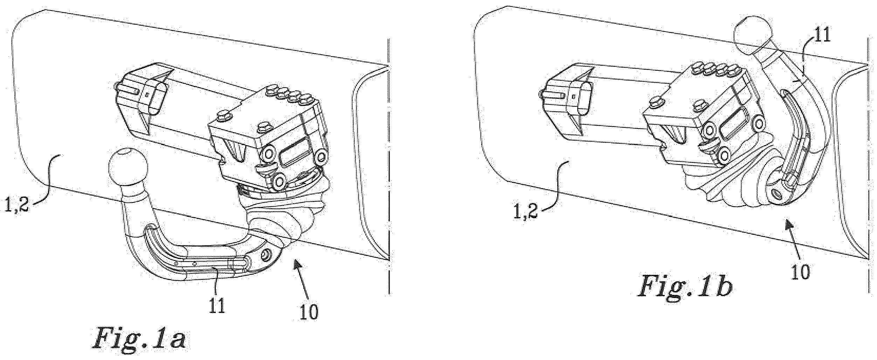

Figures 1a-1b shows parts of a vehicle 1, in this case a vehicle rear bumper 2, comprising a retractable towing hook arrangement 10. For the sake of clarity, the bumber 2 has been made transparent to better show the retractable towing hook arrangement 10. The vehicle 1 can be an automobile such as an SUV, a lorry, a tractor, a recreational vehicle (RV) or the like. The retractable towing hook arrangement 10 comprises a towing hook 11 intended to be connected to a towable object enabling the vehicle 1 to tow the towable object. A towable object can be a trailer such as a trailer for recreational sports equipment e.g. a boat trailer, jet-ski trailer or the like, or a caravan. A second group of towable objects are those which are mountable onto the towing hook 11 but are not trailed such as bicycle carriers or luggage carriers.

The towing hook 11 is adapted to be displaced between a towing position, shown in figure 1a, and a retracted position, shown in figure 1b. In the towing position, the towing hook 11 is ready to be connected to a towable object and tow the towable object while in the retracted position, the towing hook 11 is substantially hidden behind the bumper 2 and is inoperable in terms of that it cannot be connected to a towable object. Figure 1 also shows a bearing housing.

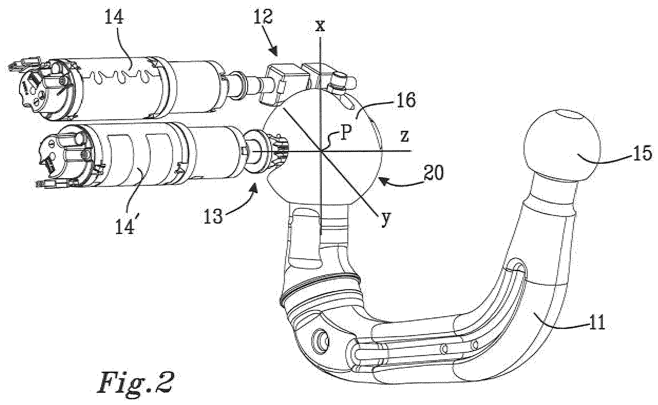

Figure 2 shows the retractable towing hook arrangement 10 in greater detail. Figure 2 shows the towing hook 11, a lock device 12 and a displacement device 13. The lock device 12 is adapted to lock the towing hook 11 in the towing position and in the retracted position. The displacement device is adapted to operate, or drive, the displacement of the towing hook 10 between the towing position and the retracted position. Both the lock device and the displacement device 12,13 are operated via electrical motors 14, 14'. It should be noted that a retractable towing hook arrangement 10 described herein may be manually operated if desired, either if none electrical motors are present or if one or more of the electrical motors 14, 14' are temporarily or permanently disabled.

The towing hook 11 comprises 1 first and a second end 15, 16. The first end 15 of the towing hook 11 is connectable to the towable object. The first end 15 of the towing hook 11 can be configured in different ways however, In figure 2, the first end 15 of the towing hook 11 is a standardized towing ball. The second end 16 of the towing hook 11 comprises a ball portion 20, or a ball. The ball portion 20 forms the ball of a ball and socket joint. The ball and socket joint permits the towing hook 11 to be displaced between the towing position and the retracted position.

For the purpose of orientation, the following axes of rotation will be used herein, X axis, corresponding to the height direction of the vehicle 1, the Y axis corresponding to the longitudinal extension of the vehicle, and the Z axis, corresponding to the transverse extension of the vehicle. The extensions of the vehicle 1 are to be understood as when the vehicle 1 is in a ready to use state. In this sense the height direction of the vehicle 1 and the X axis can also be referred to as a vertical axis. The X, Y and Z axes are perpendicular to each other and intersect at an origin P at a center point of the ball portion 20. As described herein, the origin is the point of rotation P about which the towing hook 11 rotates during displacement. When the towing hook 11 rotates, it thus rotates about at least one of the X, Y or Z axes. Due to the ball portion of the towing hook, the ball portion can form a ball of a ball and socket joint, and thus rotate about at least two of the X, Y, and Z axes, preferably about all three X, Y, and Z axes.

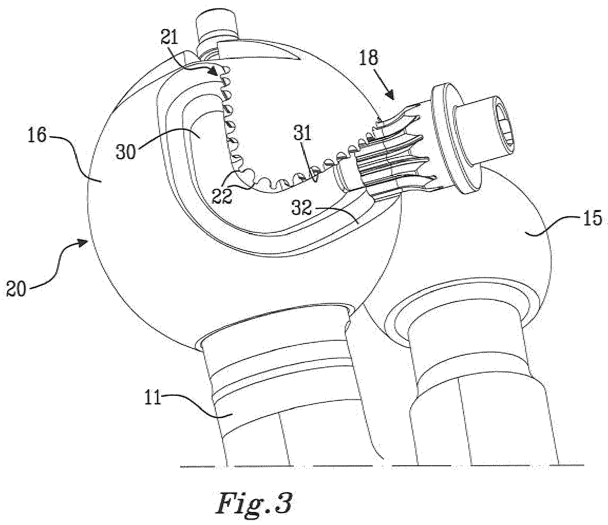

Figure 3 shows second end 16 and the ball portion 20 of the towing hook 11 in greater detail. The ball portion 20 comprises a cam track 21 comprising a plurality of gear teeth 22. The cam track 21 is adapted to be in working cooperation with a gear 18 of the displacement device 13. As is noticed, the gear 18 is a straight gear. Hence the cam track can be operated, or driven, with a straight gear which is advantageous. The gear 18 is connectable to a shaft (not shown) which is operated via the electrical motor 14' so that when the gear 18 rotates, the ball portion 20, and the towing hook 11, is displaced along a path defined by the path of the cam track 21 of the ball portion 20. The general principle of this is disclosed in European patent publication No. EP1894752 B1, and will not be described in greater detail herein.

The cam track 21 is integrally formed with the ball portion 20 of the towing hook 11, but could be formed by a separate piece of material connected to the ball portion 20 of the towing hook 11. It is however preferable if the cam track 21 is integrally formed with the ball portion 20 of the towing hook 11.

The ball portion 20 comprises a groove 30, or a cam groove. The groove 30 is adapted to receive the gear 18 of the displacement device 13. The groove 30 comprises a first and a second side wall 31, 32 and a bottom 33. The groove 30 a curved form in which the first side wall 31 form an inner curved side wall, and the second side wall 32 forms an outer curved side wall. In figure 3, the cam track 21 is arranged on the first side wall 31, i.e. the inner curved side wall. It should be noted that the cam track 2 could be formed on other places on the ball portion if desired such as on the second side wall 32, i.e. on the outer curved side wall, on the bottom 33, or on any other suitable surface of the ball portion 20.

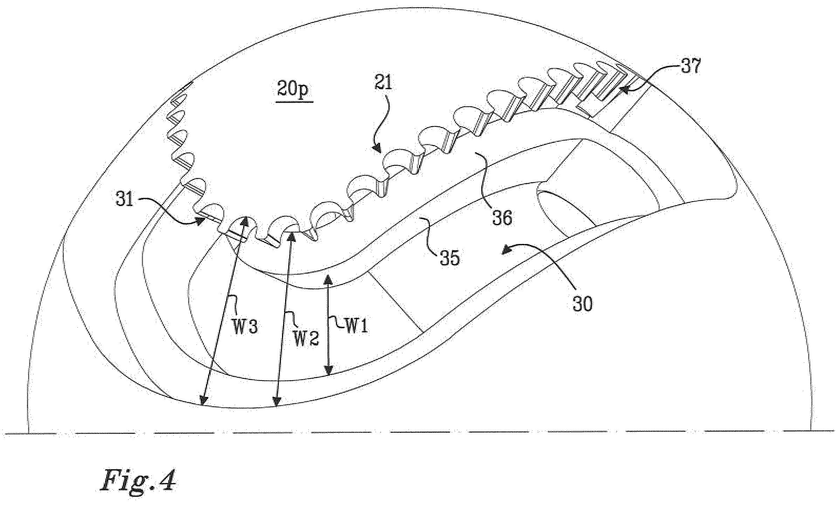

Figure 4 shows the cam track 21 of the ball portion 20 in greater detail. The cam track 21 is formed integrally with the side wall of the groove 30, and more specifically in the first side wall 31 of the groove 30. As is noticeable, the first side wall 31 comprises three sections, a lower section 35, a middle section 36 and an upper section 37. The cam track 21 positioned in the upper section 37 of the first side wall 31 of the groove 30 and is aligned with the peripheral surface 20p of the ball portion. Each of the lower section 35, the middle section 36, and the upper section 37 serves its own purpose. The lower section 36 defines a lower gear receiving groove in which a portion of the gear of the displacement device (not shown) may be guided to provide stability to the gear of the displacement device as it rotates. The middle section 36 widen the groove 30 and provides extra space for that portion of the gear 18 having teeth. The upper section 37 of the groove 30 is provided with the cam track 21 and enables the ball portion 20 to be displaced via the gear of the displacement device. Hence a groove 30 of the ball portion 20 can comprises a plurality of functional sections, e.g. three sections. A side wall of the groove 30 of the ball portion 20 can be provided with sections having different width, measured as indicated with the arrows in figure 4. The lower section 35 of the groove 30 has the smallest width, the middle section 36 of the groove 30 has the largest width and the upper section 35 of the groove 30 has a width which somewhere between that of the smallest width and the largest width.

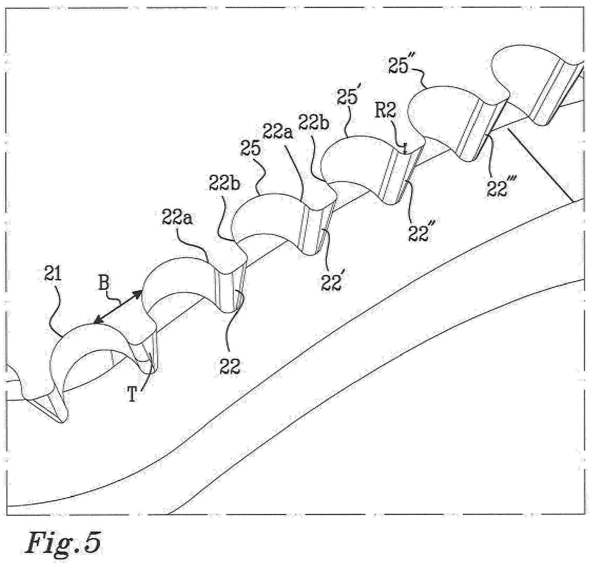

The gear teeth 22 of the cam track 21 will be described in greater detail with reference to figure 5. Figure 5 shows a portion of the cam track 21 of the ball portion 20. A plurality of gear teeth 22, 22', 22", 22''' extends in a direction towards the second side wall (not shown in figure 5 of the groove 30. The gear teeth 22, 22', 22", 22''' are formed, or defined, by recesses 25, 25', 25" having a radius curvature, hence the cam track is at least partly formed by recesses 25, 25', 25") having a radius curvature. The radius curvature can have a radius R1 of from 1-20 mm, preferably 1-10 mm.

A gear tooth 22, 22', 22", 22''' generally comprises a first and a second engagement side 22a, 22b. An engagement side is intended to engage a corresponding surface of the gear 18 (not shown) of the displacement device 13. The second engagement side 22b of a first gear tooth 22 transcends to the first engagement side 22a of the subsequent second gear tooth 22. The second engagement side 22b of the first gear tooth 22 and the first engagement side 22a of the second gear tooth 22' thus at least partly have a radius curvature.

A gear tooth 22, 22', 22", 22''' of the cam track 21 of the ball portion 20 has a base B and a tip T. The tip T of the gear teeth 22, 22', 22", 22''' has an arc-shaped form. The tip T of the gear teeth is arranged distal to the base B, which is arranged proximal to the ball portion. The distance between each tip T of two gear teeth 22, 22' is slightly larger than two times the radius R1 of the radius curvature of the recess 25, 25', 25". The tip T of the gear tooth 22, 22', 22", 22''' has an arc shaped form. In figure 5, the arc shaped form at least partly has a radius curvature with a radius R2. R2 can be from 0.02-1 mm, preferably 0.1-0.8 mm. The radius R2 can be 0.1 mm, 0.2 mm, 0.3 mm, 0.4 mm, 0.5 mm, 0.6 mm, 0.7 mm or 0.9 mm for example.

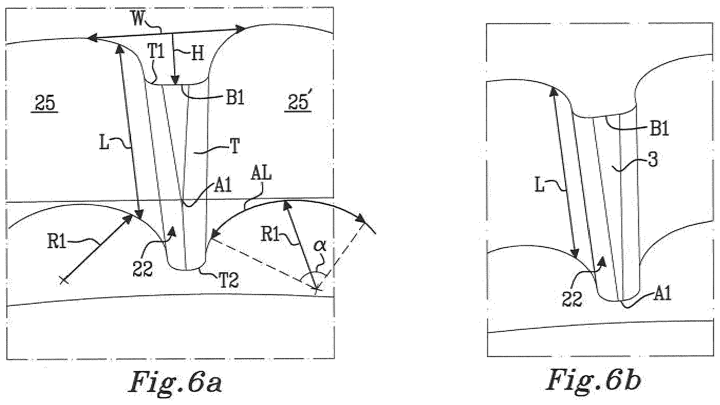

Figure 6a shows the arc length AL of a recess 25, 25', 25", the arc length AL of a recess 25, 25', 25" is given by: $L = \dfrac{\alpha}{360} 2\pi R$. R being the radius and $\alpha$ the angle between the radii. In general terms, the cam track can be formed by recesses having an arc length AL defined by the above equation. It is desirable that the angle $\alpha$ is 180 degrees or less, preferably less. A suitable $\alpha$ is selected from the interval of 100-179 degrees, preferably from 120-179, more preferably from 160-179 degrees. A suitable arc length can be about 3.5-6.2 mm, preferably 4.2-6.2 mm, more preferably 5.6-6.2 mm with a radius R of 2.0 mm. A suitable radius R is selected from 0.7-3.0 mm, preferably 1,0-2.5 mm.

The recesses 25, 25', 25" having a radius curvature may further be described as a form defined by a circular sector, having two radii R1 and an arc length AL there between. It should be noted that the recess 25, 25', 25" of the cam track can be a minor sector of a circular sector or a semicircle, i.e. a sector with the central angle of 180 degrees. Figure 5 shows recesses 25, 25', 25" defined as minor sectors.

Figure 6a also shows a gear tooth 22 of the cam track 21 of the ball portion 20 in greater detail. For the purpose of orientation, the gear tooth has a width W corresponding to the base B, a height H, and a length L. The tip T of the gear tooth 22 comprises a flat section 30. The flat section 30 has a triangular form with a base B1 and an apex A1. The apex A1 is pointing towards the arc shaped form of the tip. A first end T1 of the tip T of the gear tooth 22 has a larger width than a second end T2 of the tip T of the gear tooth 22, the gear tooth 22 thus has a non-uniform, or an asymmetrical tip T.

A gear tooth 22 can thus be provided with an asymmetrical tip T in terms of that a first end T1 of the gear tooth 22 has a different form as compared to a second end T2 of the gear tooth 22, the first and the second ends of the tip of the gear tooth being defined as shown in figure 6.

A first and a second recess 25, 25' having a radius curvature with a radius R1 can be seen in figure 6. The recesses 25, 25' are cylindrical in their form each having a length L. One or more of the recesses of the cam track can have a cylindrical form with the radius R1. It should be noted that the recesses 25, 25' could additionally or optionally have the form of a truncated cone. The recesses 25, 25' are oriented towards the center of the ball portion 20 and more precisely towards the point of rotation P (shown in figure 2).

It should be noted that the ball portion 20 of the towing hook 11 can be provided with one or more cam tracks, such as the cam tracks 21 described herein.

Figure 6b shows an alternative tip of gear tooth 22. As is noticeable the flat section 30 extends across the whole length L of the gear tooth 22. The apex A1 is in this embodiment cut off. The flat section 30 is thus trapezium formed.

The present invention also relates to a method for manufacturing a cam track, such as the cam track described above, on a ball portion for a towing hook will be described hereafter. The method is also applicable for a method for manufacturing a towing hook comprising a ball portion comprising at least one cam track, such as the cam track described above.

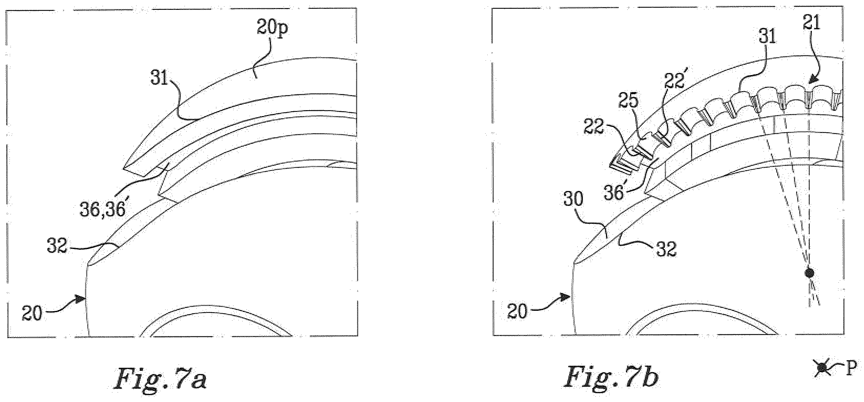

The method will be described in greater detail with reference to figures 7a-7b. Figure 7a shows a portion of the ball portion 20 of the towing hook 11. It is important to understand that the method is applicable to a ball portion connectable to a towing hook, and towing hook with a ball portion, such as the towing hook 11 described herein. The ball portion for a towing hook can thus be manufactured separate as an individual component with respect to the remaining parts of the towing hook and especially the stem and the end to which a towable object is connected. A portion of the groove 30, or cam groove, and the first and the second side walls 31, 32 are also visible.

The method steps will now be described. The groove 30, hereafter referred to as the cam groove 30, is initially formed. It may be formed by milling it, or if molding the ball portion, during such molding process. When the first relatively deep cam groove 30 has been formed, a second groove 36' is milled. The distance between the peripheral surface 20p of the ball portion 20 and the second groove 36' will define the length L (shown in figure 6) of the gear teeth 22 about to be formed. In a more general term, the length L of at least one gear tooth, or one or more of the gear teeth, are defined by the milling of the second groove 36' of the ball portion 20. The second groove 36' is equivalent with the middle section 36 described above, and is milled in a direction substantially perpendicular to the cam groove 30. The distance between the between the peripheral surface 20p of the ball portion and the second groove 36' is kept constant throughput the milling process of the second groove 36'. It is possible that on or more sections of the cam track 21 may be provided with gear teeth having longer or shorter length L if desirable. This can be enabled by varying the distance of the second groove 36' from the peripheral surface 20p of the ball portion.

Subsequently after milling the second groove 36 in the first side wall 31 of the ball portion 20, the cam track 21 is milled. The cam groove 30 is at this stage provided with the first and the second side wall 31, 32 and the bottom 33 (not shown in figures 7a-7b). The second groove 36 which was milled earlier simplifies the milling of the cam track 21 as it provides for space for the milling tool. The cam track 21 is milled so that the recesses 25, 25' and the length L of the gear teeth 22 are offset with respect to the point of rotation P of the ball portion, as is schematically illustrated in figure 7b with straight lines. It has been found that forming the cam track 21 in this manner simplifies the cooperation with a gear of a displacement device when displacing the towing hook 11 between a towing position and a retracted position.

The cam track 21 is thus at least partly formed by the second groove 36'. Further, the length L of at least one, or one or more, preferably a majority of the gear teeth 22, is defined by milling the second groove 30 of the ball portion 20.

The cam track 21 is further milled so that the recesses 25, 25' are provided with a radius curvature. The radius of the curvature is 2 mm, but could be set to an appropriate radius of from 1-20 mm, preferably 1-10 mm. The radius curvature can be constant throughput the length L of the gear teeth 22, or be changing in terms of that a truncated cone is provided instead of a cylindrical form of the recesses 25, 25'. This can be controlled by the selection of appropriate milling tools. The milling of the recesses 25, 25' is performed so that so that the recesses 25, 25' extends in a direction towards the center of said ball portion, and as mentioned so that they are directed, or pointing, towards the point of rotation P of the ball portion 20.

One method step is to machine the tip T of the gear teeth 22, 22'. A tip T of a gear tooth 22 can be machined by displacing the ball joint simultaneously as the milling tool is displaced. Hence in a more general aspect, parts of the cam track 21 can be formed by milling during displacement of both the ball portion and the milling tool. The step of machining of the tip T of the gear teeth 22, 22' is subsequently performed after the recesses 25, 25' has been milled, or the recesses and the tips T are machined intermittently. If a radius on the tip T of the gear teeth 22, 22' is desirable; such radius is efficiently manufactured by milling during simultaneous displacement of the ball portion and the milling tool.

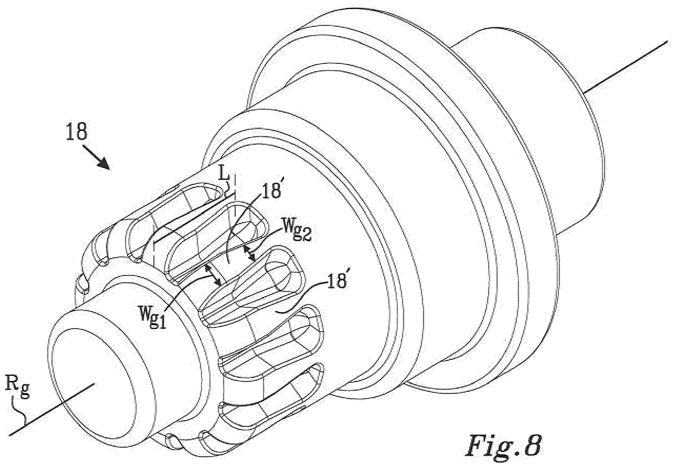

Figure 8 shows an alternative gear which can be used with the displacement device 13 (shown in figure 2). The gear 18 comprises a plurality of gear teeth 18'. As is noticeable, the width of the gear teeth 18' of the gear 18 is non -uniform. The gear teeth 18' are thicker in that end which is closest to the center of the ball portion. In practice this means that the cam track of the ball portion of the towing hook will engage a tilted surface with respect to the elongation, i.e. the length L of the gear teeth 18'. Hence it is also within the present invention to provide a gear for use with a displacement device to displace a towing hook between a towing position and a retracted position. The gear comprises a plurality of gear teeth 18' having a length L extending along a rotation axis Rg of the gear 18. The plurality of gear teeth 18' has a varying width along the length direction L of the gear teeth 18'. Figure 8 shows the width indicated with references Wg1, Wg2 of the gear teeth 18'. That end of the gear teeth 18' which is proximal to the point of rotation P (shown in figure 7b) of the ball portion of the towing hook, is thicker than the portion of the gear teeth 18' distal to the point of rotation P (shown in figure 7b) of the ball portion of the towing hook. The gear teeth 18' have a first portion having a constant width and a second portion having a decreasing width. The width Wg2 of the second portion decreases to about 50 % of the width of the first portion.

The purpose of the gear teeth 18' having a varying width is that the cam track of the ball portion simultaneously can have a point contact on one gear tooth and a line contact on another gear tooth of the cam track. The contact between the cam track of the ball portion of the towing hook and the gear of the displacement device thus starts as a line contact, i.e. a line contact surface, and rolls off as a point, i.e. a point contact surface. It is believed that this has benefits on wear, strength and smoother displacement and this is despite the simple manufacturing method of the cam track and the rigid gear teeth of the cam track of the ball portion of the towing hook.

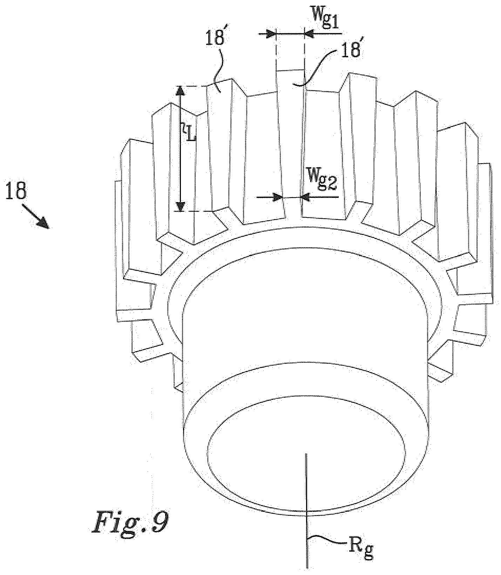

Figure 9 shows another embodiment of a gear for a displacement device to displace a towing hook between a towing position and a retracted position. The gear 18 comprises gear teeth 18' having a decreasing width along the length of the gear teeth 18'. As can be noticed, the length of the gear teeth 18' extends along the rotation axis Rg of the gear 18. In the embodiment shown in figure 9, the width of the gear teeth 18' is continuously decreasing along the full length of the gear teeth 18'. Hence it does not have a first portion having a constant width. It is of course possible that the width of the gear teeth 18' is continuously decreasing only along a major portion of the length of the gear teeth 18', and not along the full length of the gear teeth 18'.

The gear teeth 18' shown in figures 8 and 9 thus have a first and a second width Wg1, Wg2, The first width Wg1 is larger than the second width Wg2. The width Wg1, Wg2 described above should be measured on the gear teeth 18' at the same height of the gear teeth 18' and perpendicular to the rotation axis Rg. The width Wg1, Wg2 is further arranged on that portion of the gear teeth 18' which can engage with the cam track of the ball portion of the towing hook, hence on an engagement portion of the gear teeth 18'.

**Claims**

1. A towing hook (11) for a retractable towing hook arrangement (10) for a vehicle (1), said towing hook (11) comprising a ball portion (20), said ball portion (20) comprising at least one cam track (21), wherein said cam track (21) is at least partly formed by recesses (25, 25', 25") having a radius curvature, wherein said cam track (21) comprises a plurality of gear teeth (22, 22', 22", 22'''), wherein at least two of said plurality of gear teeth (22, 22', 22", 22''') of said cam track (21) are at least partly formed by said recesses (25, 25', 25") having a radius curvature, wherein said gear teeth (22, 22', 22", 22''') of said cam track (21) comprises a base (B) with a tip (T), wherein at least a portion of said tip (T) has an arc shaped form, wherein said tip (T) has a flat section, and **characterized in that** said flat section has a trapezium form or a triangular form, such that a first end (T1) of the tip (T) has a larger width than a second end (T2) of the tip (T), said triangular form having a base (B1) and an apex (A1).

2. The towing hook (11) according to claim 1, wherein said towing hook (11) comprises a first end (15) adapted to be connected to a towable object and a second end (16) comprising said ball portion (20), said ball portion (20) being adapted to form a ball of ball and socket joint of a retractable towing hook arrangement (10), enabling said towing hook (11) to be displaced between a towing position and a retracted position when mounted on said vehicle.

3. The towing hook (11) according to any one of the preceding claims, wherein said radius curvature has a radius (R1) from 1-20 mm, preferably 1-10 mm.

4. The towing hook (11) according to any one of the preceding claims, wherein said ball portion (20) comprises a groove (30) and in that said cam track (21) is arranged in said groove (30).

5. The towing hook (11) according to any one of the preceding claims, wherein said cam track (21) is integrally formed with said ball portion (20).

6. The towing hook (11) according to any one of the preceding claims, wherein said recesses (25, 25', 25") have a cylindrical form.

7. The towing hook (11) according to any one of the preceding claims, wherein said ball portion comprises a point of rotation (P) and in that said recesses (25, 25', 25") of said cam track (21) are oriented, or extend, towards the center of said ball portion (20), preferably towards said point of rotation (P) of said ball portion (20).

**8.** A gear (18) for a retractable towing hook arrangement (10) according to claim 1 for a vehicle (1), wherein the gear (18) is arranged to displace a towing hook (11) between a towing position and a retracted position, said gear (18) comprises a plurality of gear teeth (18') having a length (L) extending along a rotation axis (Rg) of said gear (18) and an engagement portion for engaging with a cam track of a ball portion of said towing hook (11),
**characterized in that**
said plurality of gear teeth (18') have a first and a second width (Wg1, Wg2) along the length (L) of said gear teeth (18') at said engagement portion.

**9.** The gear (18) according to claim 8, wherein said gear teeth (18') have a first portion having a constant width and a second portion having a decreasing width along the length L of the gear teeth (18) and at the engagement portion of the gear teeth, or optionally said gear teeth (18') have a decreasing width along the full length (L) of said gear teeth (18') at the engagement portion of the gear teeth.

**10.** A retractable towing hook arrangement (10) comprising a towing hook (11) according to any of the claims 1 to 7 and a gear (18) according to claim 8 or 9, wherein the gear (18) is arranged to displace the towing hook (11) between a towing position and a retracted position.

**11.** A method for manufacturing a towing hook according to claim 1, wherein the method comprises manufacturing a cam track (21) on a ball portion (20), said ball portion (20) being integrally formed with a towing hook (11) or connectable to a towing hook (11), said method comprising the steps of;

a) forming a groove (30) having a first and a second side wall (31, 32) and a bottom (33) in said ball portion (20);
b) milling a second groove (36) in said first side wall (31) of said groove (30);
c) milling a cam track (21) in said first side wall (31) of said groove (30), said cam track (21) being at least partly defined by said second groove (36) of said first side wall (31) of said groove (30).

**12.** The method according to claim 11, wherein said method further comprises the step of; partly forming said cam track (21) by milling recesses (25, 25') having a radius curvature.

**13.** The method according to claim 12, wherein said method further comprises the step of; milling said recesses (25, 25') so that said recesses (25, 25') are oriented towards the center of said ball portion (20), preferably towards a point of rotation (P) of said ball portion (20).

**14.** The method according to any one of the claims 11-13, wherein said method further comprises the step of; displacing said ball portion and a milling tool simultaneously, during milling of at least a portion of said cam track (21) of said ball portion (20).

**15.** The method according to claim 14, wherein said simultaneously displacement of said ball portion (20) and said milling tool is performed when machining a tip (T) of at least one gear teeth (22, 22', 22", 22"') of said cam track (21).

**Patentansprüche**

**1.** Abschlepphaken (11) für eine einziehbare Abschlepphakenanordnung (10) für ein Fahrzeug (1), wobei der Abschlepphaken (11) einen Kugelabschnitt (20), wobei der Kugelabschnitt (20) mindestens eine Nockenbahn (21) umfasst, wobei die Nockenbahn (21) zumindest teilweise durch Aussparungen (25, 25', 25") mit einer Radiuskrümmung gebildet ist, wobei die Nockenbahn (21) mehrere Verzahnungen (22, 22', 22", 22"') umfasst, wobei mindestens zwei der mehreren Zahnradzähne (22, 22', 22", 22"') der Nockenbahn (21) zumindest teilweise von den Ausnehmungen (25, 25', 25") mit einer Radiuskrümmung, wobei die Zahnradzähne (22, 22', 22", 22"') der Nockenbahn (21) eine Basis (B) mit einer Spitze (T) umfassen, wobei mindestens ein Abschnitt von der Spitze (T) eine bogenförmige Form aufweist, wobei die Spitze (T) einen flachen Abschnitt aufweist, und **dadurch gekennzeichnet, dass**
der flache Abschnitt eine Trapezform oder eine dreieckige Form aufweist, so dass ein erstes Ende (T1) der Spitze (T) eine größere Breite als ein zweites Ende (T2) der Spitze (T) aufweist, wobei die dreieckige Form eine Basis aufweist (B1) und eine Spitze (A1).

**2.** Abschlepphaken (11) nach Anspruch 1, wobei der Abschlepphaken (11) ein erstes Ende (15) umfasst, das zum Verbinden mit einem schleppbaren Gegenstand geeignet ist, und ein zweites Ende (16), das den Kugelabschnitt (20) umfasst, aufweist, wobei der Abschnitt (20) angepasst ist, um eine Kugel eines Kugelgelenks einer einziehbaren Abschlepphakenanordnung (10) zu bilden, wodurch ermöglicht wird, dass der Abschlepphaken (11) zwischen einer Zugposition und einer zurückgezogenen Position verschoben wird, wenn er an dem Fahrzeug montiert ist.

**3.** Abschlepphaken (11) nach einem der vorstehenden Ansprüche, wobei die Radiuskrümmung einen Radius (R1) von 1-20 mm, vorzugsweise 1-10 mm aufweist.

4. Abschlepphaken (11) nach einem der vorstehenden Ansprüche, wobei der Kugelabschnitt (20) eine Nut (30) aufweist und dass die Nockenbahn (21) in der Nut (30) angeordnet ist.

5. Abschlepphaken (11) nach einem der vorstehenden Ansprüche, wobei die Nockenbahn (21) einstückig mit dem Kugelabschnitt (20) ausgebildet ist.

6. Abschlepphaken (11) nach einem der vorstehenden Ansprüche, wobei die Ausnehmungen (25, 25', 25") eine zylindrische Form aufweisen.

7. Abschlepphaken (11) nach einem der vorstehenden Ansprüche, wobei der Kugelabschnitt einen Drehpunkt (P) umfasst und dass die Ausnehmungen (25, 25', 25") der Nockenbahn (21) in Richtung der Mitte des Kugelabschnitts (20), ausgerichtet sind oder vorzugsweise sich in Richtung auf den Drehpunkt (P) des Kugelabschnitts (20), erstrecken.

8. Zahnrad (18) für eine einziehbare Abschlepphakenanordnung (10) nach Anspruch 1 für ein Fahrzeug (1), wobei das Zahnrad (18) angeordnet ist, um einen Abschlepphaken (11) zwischen einer Abschleppposition und einer zurückgezogenen Position zu verschieben, wobei das Zahnrad (18) mehrere Zahnradzähne (18') mit einer Länge (L) umfasst, die sich entlang einer Drehachse (Rg) des Zahnrads (18) erstreckt und einen Eingriffsabschnitt zum Eingriff mit einer Nockenbahn eines Kugelabschnitts des Abschlepphakens (11) aufweist, **dadurch gekennzeichnet, dass** die Vielzahl von Zahnradzähnen (18'), eine erste und eine zweite Breite (Wg1, Wg2) entlang der Länge (L) der Zahnradzähne (18') am Eingriffsabschnitt aufweist.

9. Zahnrad (18) nach Anspruch 8, wobei die Zahnradzähne (18') einen ersten Abschnitt mit einer konstanten Breite und einen zweiten Abschnitt mit einer abnehmenden Breite entlang der Länge L der Zahnradzähne (18) und am Eingriffsabschnitt der Zahnradzähne aufweisen oder gegebenenfalls die Zahnradzähne (18') eine abnehmende Breite entlang der vollen Länge (L) der Zahnradzähne (18') am Eingriffsabschnitt der Zahnradzähne aufweisen.

10. Einziehbare Abschlepphakenanordnung (10) umfassend einen Abschlepphaken (11) nach einem der Ansprüche 1 bis 7 und einen Zahnrad (18) nach Anspruch 8 oder 9, wobei das Zahnrad (18) angeordnet ist, um den Abschlepphaken (11) zwischen einer Abschleppposition und einer zurückgezogenen Position zu verschieben.

11. Verfahren zum Herstellen eines Abschlepphakens nach Anspruch 1, wobei das Verfahren das Herstellen einer Nockenbahn (21) an einem Kugelabschnitt (20) umfasst, wobei der Kugelabschnitt (20) integral mit einem Abschlepphaken (11) ausgebildet oder mit einen Abschlepphaken (11) verbindbar ist, wobei das Verfahren die Schritte umfasst;

a) Ausbilden einer Nut (30) mit einer ersten und einer zweiten Seitenwand (31, 32) und einem Boden (33) im Kugelabschnitt (20);
b) Fräsen einer zweiten Nut (36) in der ersten Seitenwand (31) der Nut (30);
c) Fräsen einer Nockenbahn (21) in der ersten Seitenwand (31) der Nut (30), wobei die Nockenbahn (21) zumindest teilweise durch die zweite Nut (36) der ersten Seitenwand (31) der Nut (30) definiert ist.

12. Verfahren nach Anspruch 11, wobei das Verfahren weiter den Schritt umfasst; teilweises Ausbilden der Nockenbahn (21) durch Fräsen von Ausnehmungen (25, 25') mit einer Radiuskrümmung.

13. Verfahren nach Anspruch 12, wobei das Verfahren weiter den Schritt umfasst; Fräsen der Ausnehmungen (25, 25') derart, dass die Ausnehmungen (25, 25') zur Mitte des Kugelabschnitts (20) hin, vorzugsweise zu einem Drehpunkt (P) des Kugelabschnitts (20) hin ausgerichtet sind.

14. Verfahren nach einem der Ansprüche 11 bis 13, wobei das Verfahren weiter den Schritt umfasst; gleichzeitiges Verschieben des Kugelabschnitts und eines Fräswerkzeugs während des Fräsens von mindestens einem Abschnitt der Nockenbahn (21) des Kugelabschnitts (20).

15. Verfahren nach Anspruch 14, wobei das gleichzeitige Verschieben des Kugelabschnitts (20) und des Fräswerkzeugs durchgeführt wird, wenn eine Spitze (T) von mindestens einer Zahnradverzahnung (22, 22', 22", 22''') der Nockenbahn (21) bearbeitet wird.

## Revendications

1. Crochet de remorquage (11) pour un agencement de crochet de remorquage rétractable (10) pour un véhicule (1), ledit crochet de remorquage (11) comprenant une partie boule (20), ladite partie boule (20) comprenant au moins un chemin de came (21), dans lequel ledit chemin de came (21) est au moins partiellement formé d'évidements (25, 25', 25") ayant un rayon de courbure, dans lequel ledit chemin de came (21) comprend une pluralité de dents d'engrenage (22, 22', 22", 22'''), dans lequel au moins deux de ladite pluralité de dents d'engrenage (22, 22', 22", 22''')

dudit chemin de came (21) sont au moins en partie formées par lesdits évidements (25, 25', 25") ayant un rayon de courbure, dans lequel lesdites dents d'engrenage (22, 22', 22", 22'") dudit chemin de came (21) comprennent une base (B) avec une pointe (T), dans lequel au moins une partie de ladite pointe (T) a une forme d'arc, dans lequel ladite pointe (T) a une section plate, et **caractérisé en ce que** ladite section plate a une forme de trapèze ou une forme triangulaire, de sorte qu'une première extrémité (T1) de la pointe (T) a une largeur plus grande qu'une seconde extrémité (T2) de la pointe (T), ladite forme triangulaire ayant une base (B1) et un sommet (A1).

2. Crochet de remorquage (11) selon la revendication 1, dans lequel ledit crochet de remorquage (11) comprend une première extrémité (15) adaptée pour être connectée à un objet remorquable et une seconde extrémité (16) comprenant ladite partie boule (20), ladite partie boule (20) étant adaptée pour former une boule d'une articulation sphéroïde d'un agencement de crochet de remorquage rétractable (10), permettant audit crochet de remorquage (11) d'être déplacé entre une position de remorquage et une position rétractée lorsqu'il est monté sur ledit véhicule.

3. Crochet de remorquage (11) selon l'une quelconque des revendications précédentes, dans lequel ledit rayon de courbure a un rayon (R1) de 1 à 20 mm, de préférence de 1 à 10 mm.

4. Crochet de remorquage (11) selon l'une quelconque des revendications précédentes, dans lequel ladite partie boule (20) comprend une rainure (30) et en ce que ledit chemin de came (21) est agencé dans ladite rainure (30).

5. Crochet de remorquage (11) selon l'une quelconque des revendications précédentes, dans lequel ledit chemin de came (21) est formé d'un seul tenant avec ladite partie boule (20).

6. Crochet de remorquage (11) selon l'une quelconque des revendications précédentes, dans lequel lesdits évidements (25, 25', 25") ont une forme cylindrique.

7. Crochet de remorquage (11) selon l'une quelconque des revendications précédentes, dans lequel ladite partie boule comprend un point de rotation (P) et en ce que lesdits évidements (25, 25', 25") dudit chemin de came (21) sont orientés, ou étendus, vers le centre de ladite partie boule (20), de préférence vers ledit point de rotation (P) de ladite partie boule (20).

8. Engrenage (18) pour un agencement de crochet de remorquage rétractable (10) selon la revendication 1 pour un véhicule (1), dans lequel l'engrenage (18) est agencé pour déplacer un crochet de remorquage (11) entre une position de remorquage et une position rétractée, ledit engrenage (18) comprend une pluralité de dents d'engrenage (18') ayant une longueur (L) s'étendant le long d'un axe de rotation (Rg) dudit engrenage (18) et une partie de mise en prise pour la mise en prise avec un chemin de came d'une partie boule dudit crochet de remorquage (11), **caractérisé en ce que** ladite pluralité des dents d'engrenage (18') a une première et une seconde largeur (Wg1, Wg2) le long de la longueur (L) desdites dents d'engrenage (18') au niveau de ladite partie de mise en prise.

9. Engrenage (18) selon la revendication 8, dans lequel lesdites dents d'engrenage (18') ont une première partie ayant une largeur constante et une seconde partie ayant une largeur diminuant le long de la longueur L des dents d'engrenage (18) et au niveau de la partie de mise en prise des dents d'engrenage, ou en option lesdites dents d'engrenage (18') ont une largeur diminuant le long de la longueur totale (L) desdites dents d'engrenage (18') au niveau de la partie de mise en prise des dents d'engrenage.

10. Agencement de crochet de remorquage rétractable (10) comprenant un crochet de remorquage (11) selon l'une quelconque des revendications 1 à 7 et un engrenage (18) selon la revendication 8 ou 9, dans lequel l'engrenage (18) est agencé pour déplacer le crochet de remorquage (11) entre une position de remorquage et une position rétractée.

11. Procédé de fabrication d'un crochet de remorquage selon la revendication 1, dans lequel le procédé comprend la fabrication d'un chemin de came (21) sur une partie boule (20), ladite partie boule (20) étant formée d'un seul tenant avec un crochet de remorquage (11) ou pouvant être connectée à un crochet de remorquage (11), ledit procédé comprenant les étapes consistant à :

   a) former une rainure (30) ayant une première et une seconde paroi latérale (31, 32) et une partie inférieure (33) dans ladite partie boule (20) ;
   b) fraiser une seconde rainure (36) dans ladite première paroi latérale (31) de ladite rainure (30) ;
   c) fraiser un chemin de came (21) dans ladite première paroi latérale (31) de ladite rainure (30), ledit chemin de came (21) étant au moins en partie défini par ladite seconde rainure (36) de ladite première paroi latérale (31) de ladite rainure (30).

**12.** Procédé selon la revendication 11, dans lequel ledit procédé comprend en outre l'étape consistant à : former en partie ledit chemin de came (21) en fraisant des évidements (25, 25') ayant un rayon de courbure.

**13.** Procédé selon la revendication 12, dans lequel ledit procédé comprend en outre l'étape consistant à : fraiser lesdits évidements (25, 25') de sorte que lesdits évidements (25, 25') sont orientés vers le centre de ladite partie boule (20), de préférence vers un point de rotation (P) de ladite partie boule (20).

**14.** Procédé selon l'une quelconque des revendications 11 à 13, dans lequel ledit procédé comprend en outre l'étape consistant à : déplacer ladite partie boule et un outil de fraisage simultanément, pendant le fraisage d'au moins une partie dudit chemin de came (21) de ladite partie boule (20).

**15.** Procédé selon la revendication 14, dans lequel ledit déplacement de façon simultanée de ladite partie boule (20) et dudit outil de fraisage est effectué pendant l'usinage d'une pointe (T) d'au moins une dent d'engrenage (22, 22', 22", 22''') dudit chemin de came (21).

*Fig.1b*

*Fig.1a*

*Fig.2*

EP 2 960 085 B1

Fig.3

*Fig. 4*

Fig.5

Fig.6b

Fig.6a

18

EP 2 960 085 B1

Fig.7b

Fig.7a

19

*Fig.8*

Fig.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1894752 B1